# EUROPEAN PATENT SPECIFICATION

(11) **EP 2 418 830 B1**
(45) Date of publication and mention of the grant of the patent: **03.04.2013**
(21) Application number: 10172809.5
(22) Date of filing: 13.08.2010
(51) Int. Cl.: H04M 1/22, H04M 1/02, H01R 13/46, H04M 1/725

(54) **Near-field communication (NFC) system providing plug-in device connection assistance features and related methods**
Nahfeldkommunikationssystem (NFC) mit Steckvorrichtungsanschlusshilfefunktionen und zugehörige Verfahren
Système de communication de champ proche (NFC) fournissant des fonctions d'assistance de connexion de dispositif enfichable et procédés associés

(43) Date of publication of application: 15.02.2012
(73) Proprietor: Research In Motion Limited, Waterloo, ON N2L 3W8 (CA)
(72) Inventor: Griffin, Jason Tyler, Waterloo Ontario N2L 3W8 (CA); Walker, David Ryan, Waterloo Ontario N2L 3W8 (CA)
(74) Representative: Phillips, Emily Elizabeth

(56) References cited:
- WO-A2-2008/011553
- US-A1- 2006 044 148

## Description

### Technical Field

The present disclosure relates to the field of communications, and more particularly, to electronic devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

With NFC technology becoming more widely adopted, it is now used with portable wireless communications devices in association with other short-range wireless communications, such as a wireless Bluetooth connection. For example, an NFC connection is often used to establish a wireless Bluetooth connection in which data for establishing the Bluetooth connection is communicated.

US 2006/0044148 discloses a computer system including a plurality of LEDs situated in correspondence to a plurality of connectors. System peripherals which connect to the plurality of connectors are outfitted to include a transponder having a unique RF ID tag. The system further includes an RFID reader which detects as RF ID tag emitted by a proximate transponder when a user proceeds to plug-in a system peripheral outfitted with such transponder. The system further includes a light controller which selectively energizes the LEDs and provides a distinguishing energization signal to at least one but less than all of the LEDs based on the RF ID value. Preferably, the system processor oversees the selection.

### Brief Description of the Drawings

FIG. 1 is a schematic block diagram of a near-field communication (NFC) system in accordance with an example embodiment.

FIG. 2 is a schematic block diagram of an alternative embodiment of the NFC system of FIG. 1.

FIG. 3 is a front view of an example implementation of the system of FIG. 1 in which the illustrated mobile wireless communications device provides a location indicator for a plug-in cable.

FIG. 4 is a front view of an alternative example implementation of the system of FIG. 1 in which the illustrated mobile wireless communications device provides an incompatibility indicator for a plug-in cable.

FIGS. 5 through 7 are flow diagrams illustrating method aspects associated with the systems of FIGS. 1 through 4.

FIG. 8 is a schematic block diagram illustrating example components of a mobile wireless communications device that may be used with the NFC systems of FIGS. 1 through 4.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a near-field communication (NFC) system is disclosed herein which may include at least one plug-in device comprising a first NFC sensor, and a mobile wireless communications device. More particularly, the mobile wireless communications device may include a portable housing defining at least one plug-in device port, at least one light source carried by the portable housing and positioned to illuminate the at least one plug-in device port, an optical sensor carried by the portable housing configured to determine an ambient light level, and a second NFC sensor carried by the portable housing and configured to establish NFC communications with the first NFC sensor when in proximity therewith. The mobile wireless communications device may further include a controller carried by the portable housing and coupled to the at least one light source, the optical sensor, and the second NFC sensor and configured to cause the at least one light source to illuminate the at least one plug-in device port based upon NFC communications between the first and second NFC sensors and the ambient light level. As such, the at least one plug-in device port may advantageously be illuminated to permit more controlled and systematic plugging in of the at least one plug-in device as appropriate based upon the ambient light level.

More particularly, the controller may be configured to cause the at least one light source to illuminate the at least one plug-in device port based upon NFC communications between the first and second NFC sensors and the ambient light level being below a threshold light level. Further, the controller may be configured to cause the at least one light source to illuminate the at least one plug-in device port with different luminosities based upon NFC communications between the first and second NFC sensors and the ambient light level. In addition, the controller may be further configured to cause the at least one light source to change illumination of the at least one plug-in device port based upon connection of the at least one plug-in device to the at least one plug-in device port.

The mobile wireless communications device may further comprise a display carried by the portable housing and coupled to the controller. As such, the controller may be configured to cause the display to display a location indicator for the at least one plug-in device port when the at least one light source illuminates the at least one plug-in device port. Also, the controller may be further configured to determine if the at least one plug-in device and the at least one plug-in device port are incompatible and, if so, cause the display to display an incompatibility indicator.

The at least one plug-in device may comprise a plurality of different plug-in devices in some embodiments, and the at least one plug-in device port may comprise a plurality of different plug-in device ports. As such, the controller may be configured to cause the at least one light source to illuminate a given one of the plug-in device ports based upon NFC communications between the second NFC sensor and a first NFC sensor of a respective plug-in device Lype. By way of example, the at least one light source may comprise at least one light emitting diode (LED). Furthermore, the at least one plug-in device may comprise at least one universal serial bus (USB) cable, and the at least one plug-in device port may comprise at least one USB port. In addition, the mobile wireless communications device may also include a wireless transceiver coupled to the controller and configured for communicating over a wireless communications network.

A related mobile wireless communications device, such as the one described briefly above, is also provided. Moreover, an electronic device is also provided and is for use with at least one plug-in device comprising a first NFC sensor. The electronic device may include a housing defining at least one plug-in device port, at least one light source carried by the housing and positioned to illuminate the at least one plug-in device port, an optical sensor carried by the housing configured to determine an ambient light level, and a second NFC sensor carried by the housing and configured to establish NFC communications with the first NFC sensor when in proximity therewith. The electronic device may further include a controller carried by the housing and coupled to the at least one light source, the optical sensor, and the second NFC sensor and configured to cause the at least one light source to illuminate the at least one plug-in device port based upon NFC communications between the first and second NFC sensors and the ambient light level.

A related method is for using at least one plug-in device and a mobile wireless communications device, such as those described briefly above. The method may include establishing NFC communications between the first and second NFC sensors when in proximity with one another, determining an ambient light level using the optical sensor, and illuminating the at least one plug-in device port based upon NFC communications between the first and second NFC sensors and the ambient light level.

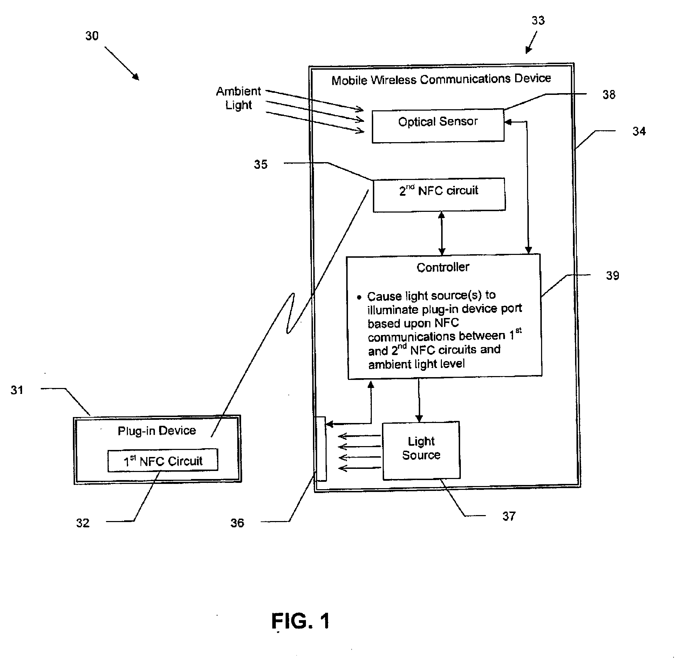

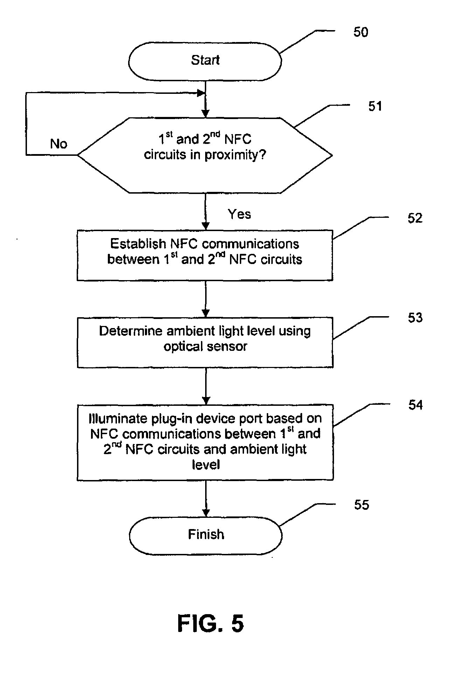

Referring initially to FIGS. 1 and 5, a near-field communication (NFC) system **30** illustratively includes a plug-in device **31** comprising a first NFC sensor or circuit **32**, and a mobile wireless communications device **33** (also referred to as a "mobile device" herein) which includes a second NFC sensor or circuit **35.** Various types of plug-in devices may be used, such as cables, memory devices, portable flash drives, portable media players, projectors, headphones, external keypads, etc., which are otherwise adapted to be connected to respective plug-in ports on mobile devices or other electronic devices.

NFC is a short range variant of radio-frequency identification (RFID), typically operating at approximately 13.56 MHz. NFC technology allows a wireless connection to be established between a mobile device that has an embedded NFC chipset and an ISO 14443 reader terminal at a range of up to about 20cm, so that the devices are "swiped" or otherwise moved in close proximity to communicate. NFC is a standardized technology that may be used in various applications such as mobile banking, ticketing, secure physical access, etc. The mobile device **33** may further include additional wireless capabilities beyond NFC in some embodiments, as will be discussed further below, but this is not required in all embodiments. Example mobile devices may include portable or personal media players (e.g., MP3 players, video players, etc.), remote controls (e.g., television or stereo remotes, etc.), portable gaming devices, portable or mobile telephones, smartphones, etc.

The mobile device **33** illustratively includes a portable housing **34** which defines a plug-in device port 36. By way of example, the plug-in device port may be a universal serial bus (USB) or micro-USB port, a headphone port, etc. The second NFC sensor **35** is carried by the portable housing **34**. Beginning at Block **50**, the second NFC sensor **35** is configured to establish NFC communications with the first NFC sensor **32** when in proximity therewith, at Blocks **51-52,** as discussed above. The first and second NFC sensors **32, 35** may operate in a passive or active NFC mode in different embodiments. A light source **37,** such as a light emitting diode(s), is also illustratively carried by the portable housing **34** and is positioned to illuminate the plug-in device port **36**, as will be discussed further below. Moreover, an optical sensor **38** is further carried by the portable housing **33** and is configured to determine an ambient light level, i.e., the level of light in the environment surrounding the mobile device **33**, at Block **53**.

The mobile device **33** further illustratively includes a controller **39** carried by the portable housing **34** and coupled to the light source **37**, the optical sensor **38**, and the second NFC sensor **35**. The controller **39** may cause the optical sensor **38** to perform an ambient light level determination or measurement responsive to the first and second NFC sensors **32, 35** engaging in NFC communications, for example. This may advantageously help promote power savings, as ambient light level measurements are only taken when needed. However, in some embodiments ambient light level measurements may be taken on an intermittent or periodic basis, for example. The ambient light level measurements may also be used for controlling other functions, such as setting a luminosity level of a display, etc., to provide appropriate display lighting for the environment in which the mobile device **33** is located.

The controller **39** is configured to cause the light source **37** to illuminate the plug-in device port **36** based upon NFC communications between the first and second NFC sensors **32**, **35** and the ambient light level, at Block **54**, thus concluding the method illustrated in FIG. 5 (Block **55**), although in an implementation these steps may be repeated for subsequent device plug-in operations. This may be particularly advantageous in that it can be difficult to locate a port (e.g., USB, headset, etc.) on a mobile device in a relatively dark environment and insert or plug-in a plug-in device into the port in a controllable or systematic manner, since the light of the mobile device display typically is not directed so that it will adequately illuminate the side, top, back, or bottom of the device where such ports are often located.

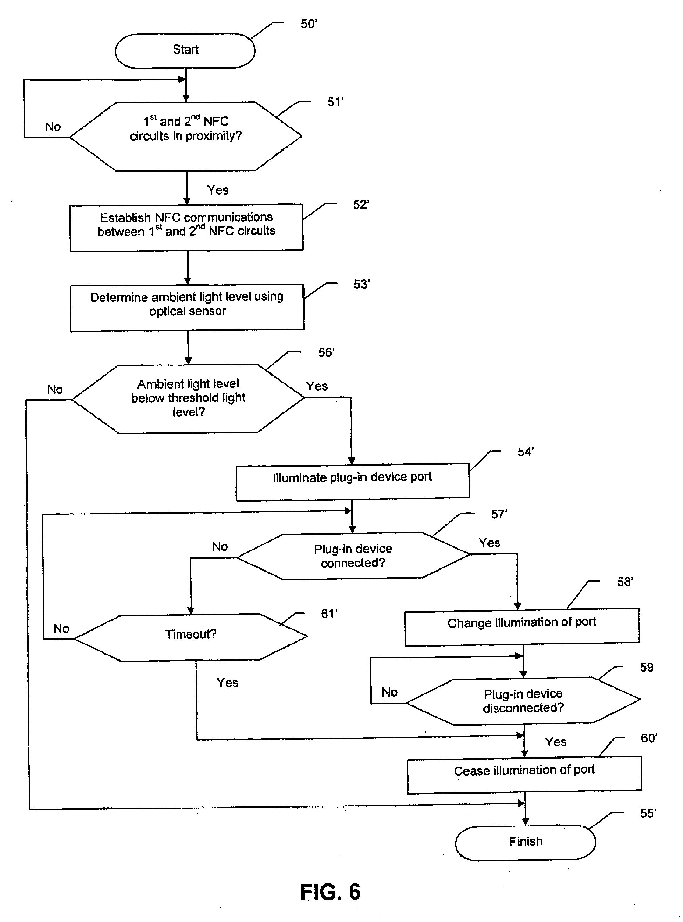

Referring additionally to FIG. 6, by way of example the controller **39** may selectively cause the light source **37** to illuminate the plug-in device port **36** when the ambient light level is below a threshold light level, at Blocks **56'** and **54'.** Thus, if the mobile device **33** is located in a well lit environment so that the measured ambient light level is above a given threshold light level (e.g., a well lit room, outside in direct sunlight, etc.), then it would otherwise be easy to see the plug-in device port **36**, and illumination by the light source **37** need not be provided. However, if the mobile device **33** is located in a poorly lit environment so that the measured ambient light level is below the given threshold light level (e.g., in a dark room, outside at night, etc.), then the controller **39** will advantageously cause the light source **37** to illuminate the plug-in device port **36** to assist with connection of the plug-in device **31**. The threshold light level may be established in various ways. For example, this setting may be fixed during the manufacturing process. It may also be a changeable setting, such that the threshold level may be changed through an on-screen menu generated by the controller **39**, for example.

Another advantageous feature is that the controller **39** may change the illumination of the plug-in device port **36** once the plug-in device **31** is connected thereto, at Blocks **57'-58'.** By way of example, the illumination level or luminosity of the plug-in device port **36** may be changed, such as by making it less bright or changing a color of the light. Thus, for example, the change in light level or color may therefore provide a visual indication that the plug-in device **31** is properly connected, charging, transferring data, etc. Upon disconnection of the plug-in device **31**, at Block **59',** the controller **39** may then cause the illumination source **37** to cease illuminating the plug-in port **36,** at Block **60'.** If the plug-in device **31** is not plugged in to the plug-in device port **36** within a timeout period (i.e., a set period of time) after NFC communication between the first and second NFC sensors **32, 35** is established, at Block **61',** then the controller **39** may also cause the light source **37** to cease illuminating the plug in device port as well (Block **60'**).

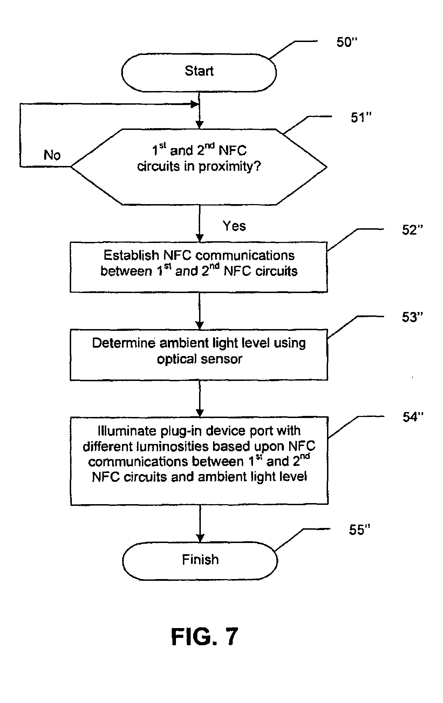

Referring additionally to FIG. 7, another approach for illuminating the plug-in device port **36** is that the controller **39** may cause the light source **37** to illuminate the plug-in device port with different luminosities, at Block **55".** That is, rather than using a threshold light level to determine whether to illuminate the plug-in device port **36** as discussed above with reference to FIG. 6, the controller **39** may cause the light source **37** to use brighter luminosities in darker environments and lighter luminosities in brighter environments, or vice-versa depending upon whether brighter luminosities are useful for seeing the port in a well lit environment thereby permitting more controlled or systematic insertion of the plug-in device into the plug-in device port, for example. Stated alternatively, the controller **39** may cause the light source **37** to illuminate the plug-in device port **36** to an appropriate level based upon the given ambient light level.

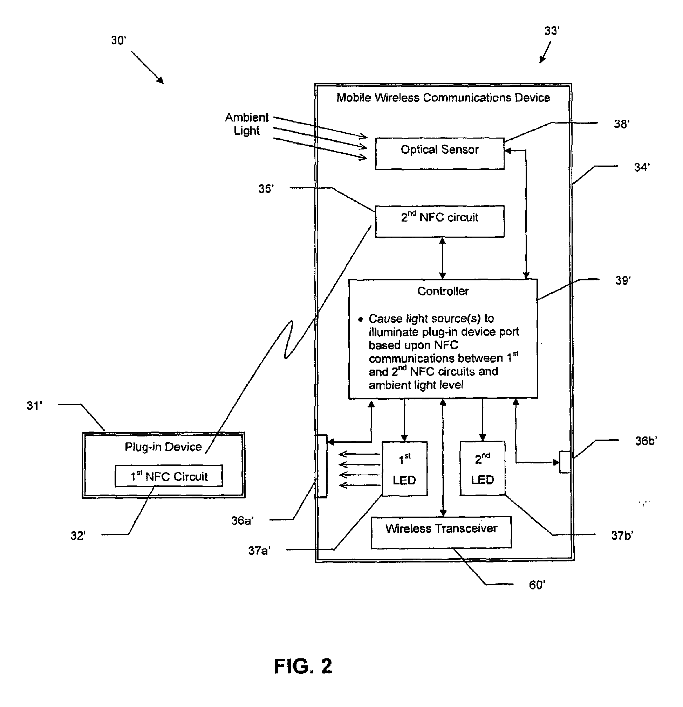

Turning now to FIG. 2, in this example the mobile device **33'** illustratively includes a plurality of LED light sources **37a', 37b'** each for illuminating a respective plug-in device port **36a', 36b**'. In such embodiments, the controller **39'** causes the appropriate light source **37a', 37b'** to illuminate a given one of the plug-in device ports **36a', 36b**' based upon NFC communications between the second NFC sensor **35'** and the first NFC sensor **32'** of a respective plug-in device type. Here, the plug-in device **31'** corresponds to the plug-in device port **36a'** (i.e., they are of a same type), so the controller **39'** causes the plug-in device port **36a'** to be illuminated but not the plug-in device port **36b'**, which is of a different type. For example, the plug-in device port **36a'** may be a USB port, while the plug-in device port **36b'** may be a micro-SD port, and the plug-in device **31'** may have a USB plug compatible with the USB-based plug-in device port **36a',** so in this example only plug-in device port **36a'** may be illuminated. In the illustrated example, the mobile device **33'** further includes a wireless transceiver **60'** (e.g., cellular, WiFi, WiMAX, etc.) for communicating over a respective type of wireless network, as will be discussed further below.

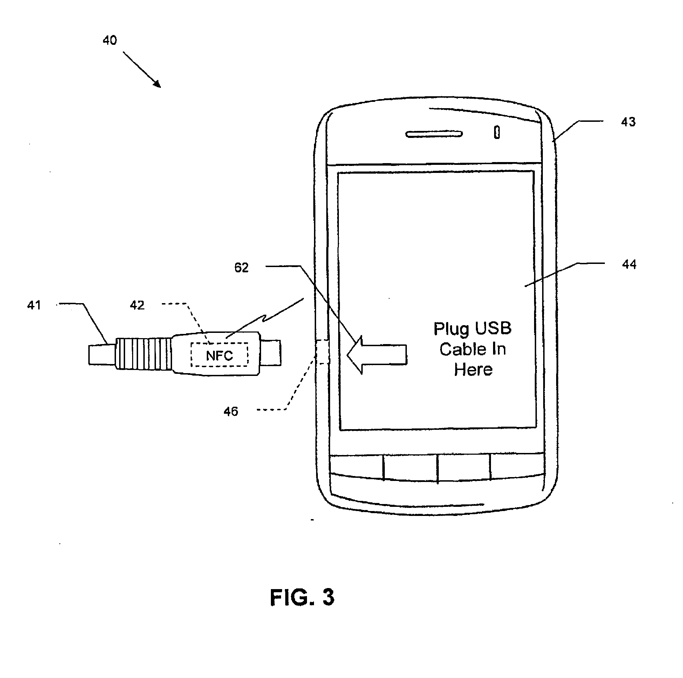

Turning now to FIG. 3, an example implementation of an NFC system **40** includes a USB cable **41** with an embedded NFC sensor **42**, and a mobile device **43** including a display **44** and a USB port **46**. For ease of illustration, the optical sensor, light source, second NFC sensor, and controller components of the mobile device **43**, which are similar to those described above with reference to FIGS. 1 and 2, are not shown in FIG. 3. The controller of the mobile device **43** may advantageously be configured to cause the display **44** to display a location indicator to indicate the location of the plug-in device port **46** when the first and second NFC sensors come in proximity and begin communicating. In the present example, the location indicator takes the form of an arrow **62** on the display **44,** the arrow **62** points to the location of the USB port **46,** as shown, as well as a message that reads "Plug USB Cable In Here". The message, and direction of the arrow **62,** may be changed for different types of plug-in devices. For example, if a headphone plug with an embedded NFC sensor is brought in close proximity to the mobile device **43,** then the arrow may point to the upper right corner of the display **44** (or other location of the headphone port), and the message may change to read "Plug Headphones In Here". Other location indicators and messages may also be used in different embodiments.

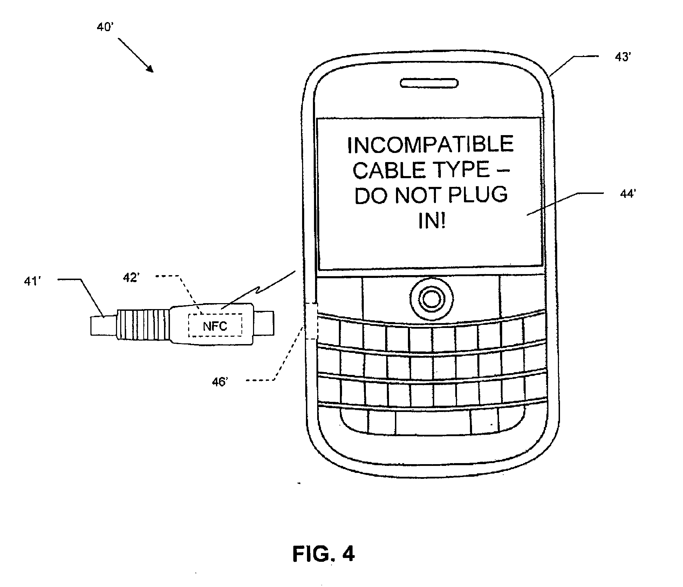

Referring to FIG. 4, there is shown a similar system **40'** with a different style of mobile device **43',** which has a different type of USB connector port **46'** that is not compatible with the NFC cable **41'.** Thus, as NFC communications are established with the first NFC sensor **42',** the controller of the device **43'** determines that the USB cable **41'** and the USB port **46'** are incompatible, e.g., based upon an identification (ID) or other identifying data provided by the first NFC sensor **42'.** The controller accordingly causes the display **44**' to display an incompatibility indicator. In the present example, the incompatibility indicator takes the form of a message that reads "INCOMPATIBLE CABLE TYPE - DO NOT PLUG IN!" Here again, other incompatibility indicators or messages may also be used in different embodiments.

It should be noted that while the location and incompatibility indicators are shown separately in FIGS. 3 and 4 for clarity of illustration, both features may be implemented in a same mobile device in some embodiments. Moreover, in some embodiments the location and incompatibility indicators may be used without light sources **37**, **37'.** That is, in some embodiments separate light sources **37, 37'** need not be included, and the display **44** or **44'** may be used to provide location or incompatibility indicators without illumination of the device port **46, 46'.**

It should also be noted that the above-described plug-in device port illumination techniques may be used with other types of electronic devices and computing devices besides mobile devices. For example, these techniques may also be used with electronic devices which have housings that are not necessarily considered to be portable, such as television equipment, stereo equipment, video game consoles, computers, etc.

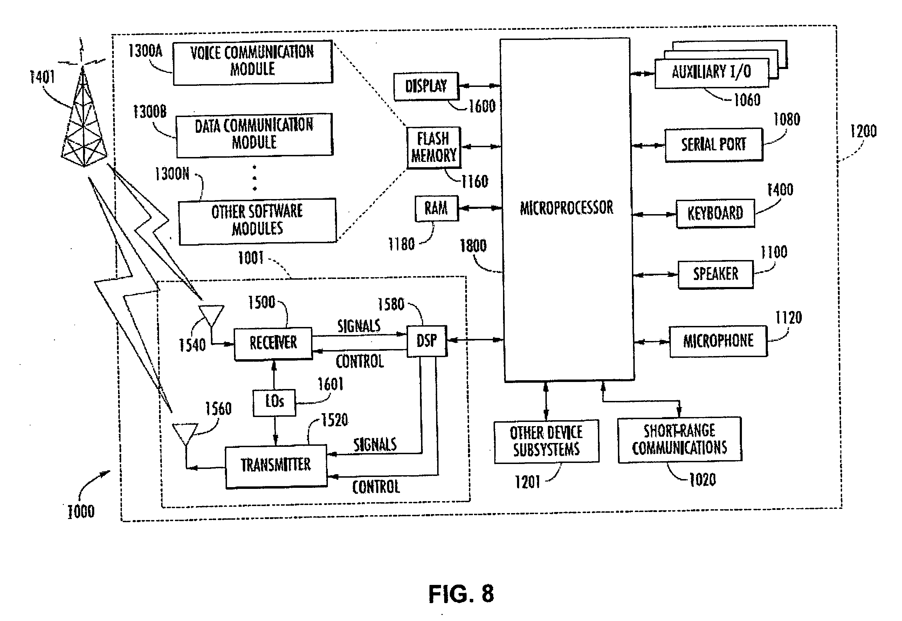

Example components of a mobile wireless communications device **1000** that may be used in accordance with the above-described embodiments are further described below with reference to FIG. 8. The device **1000** illustratively includes a housing **1200**, a keypad **1400** and an output device **1600**. The output device shown is a display **1600**, which may comprise a full graphic LCD. Other types of output devices may alternatively be utilized. A processing device **1800** is contained within the housing 1200 and is coupled between the keypad **1400** and the display **1600.** The processing device **1800** controls the operation of the display **1600,** as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 8. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500,** a transmitter **1520,** and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. An electronic device (33) capable of being used with a plug-in device (31) comprising a first near-field communication NFC sensor (32), the electronic device comprising:
a housing (34) defining a plug-in device port (36);
a light source (37) carried by said housing, the light source being positioned to illuminate the plug-in device port;
an optical sensor (38) carried by said housing, the optical sensor being configured to determine an ambient light level;
a second NFC sensor (35) carried by said housing, the second NFC sensor being configured to establish NFC communications with said first NFC sensor when in proximity therewith; and
a controller (39) carried by said housing and coupled to said light source, said optical sensor, and said second NFC sensor, the controller being configured to cause said light source to illuminate the plug-in device port based upon NFC communications between said first and second NFC sensors and the ambient light level.

2. The electronic device (33) of Claim 1 wherein said controller is configured to cause said light source (37) to illuminate the plug-in device port (36) based upon NFC communications between said first and second NFC sensors (32, 35) and the ambient light level being below a threshold light level.

3. The electronic device (33) of Claim 1 wherein said controller is configured to cause said light source (37) to illuminate the plug-in device port (36) with different luminosities based upon NFC communications between said first and second NFC sensors (32, 35) and the ambient light level.

4. The electronic device (33) of Claim 1 wherein said controller (39) is further configured to cause said light source (37) to change illumination of the plug-in device port (36) based upon physical connection of the plug-in device (31) to the plug-in device port.

5. The electronic device (43) of Claim 1 further comprising a display (43') carried by said housing (34) and coupled to said controller (39); and wherein said controller is configured to cause said display to display a location indicator (32) to indicate a location of the plug-in device port (46).

6. The electronic device of Claim 1 further comprising a display (43') carried by said housing (34) and coupled to said controller (39); and wherein said controller is further configured to determine whether the plug-in device (41') and the plug-in device port (46') are incompatible and, if so, cause said display to display an incompatibility indicator.

7. The electronic device of Claim 1 wherein the plug-in device (31) comprises a plurality of different plug-in devices; wherein the plug-in device port (36) comprises a plurality of different plug-in device ports; and wherein said controller is configured to cause said light source (37) to illuminate a given one of the plug-in device ports based upon NFC communications between said second NFC sensor (35) and the first NFC sensor (32) of a respective plug-in device type.

8. A near-field communication NFC (30) system comprising an electronic device (33) in accordance with Claim 1.

9. A method of using at least one plug-in device (31) comprising a first near-field communication (NFC) sensor (32) and a mobile wireless communications device comprising a housing defining a plug-in device port (36), a light source carried by the housing, the light source (37) being positioned to illuminate the a plug-in device port, an optical sensor carried by the portable housing, and a second NFC sensor (35) carried by the portable housing, the method comprising:
establishing NFC communications between the first and second NFC sensors (32, 35) when in proximity with one another;
determining an ambient light level using the optical sensor (38); and
illuminating the plug-in device port (36) based upon NFC communications between the first and second NFC sensors and the ambient light level.

10. The method of Claim 9 wherein said illuminating comprises illuminating the plug-in device port (36) based upon NFC communications between the first and second NFC sensors (32, 35) and the ambient light level being below a threshold light level.

11. The method of Claim 9 wherein said illuminating comprises illuminating the plug-in device port (36) with different luminosities based upon NFC communications between the first and second NFC sensors (32, 35) and the ambient light level.

12. The method of Claim 9 further comprising changing illumination of the plug-in device port (36) based upon physical connection of the plug-in device (31) with the plug-in device port.

## Patentansprüche

1. Eine elektronische Vorrichtung (33), die ausgebildet ist, mit einer Plug-in-Vorrichtung (31) verwendet zu werden, die einen ersten Nahfeldkommunikations(NFC - near-field communication)-Sensor (32) aufweist, wobei die elektronische Vorrichtung aufweist:
ein Gehäuse (34), das einen Plug-in-Vorrichtungsanschluss (36) definiert;
eine Lichtquelle (37), die durch das Gehäuse getragen wird, wobei die Lichtquelle positioniert ist, den Plug-in-Vorrichtungsanschluss zu beleuchten;
einen optischen Sensor (38), der durch das Gehäuse getragen wird, wobei der optische Sensor konfiguriert ist, einen Umgebungslichtpegel zu bestimmen;
einen zweiten NFC-Sensor (35), der durch das Gehäuse getragen wird, wobei der zweite NFC-Sensor konfiguriert ist, NFC-Kommunikationen mit dem ersten NFC-Sensor herzustellen, wenn in dessen Nähe; und
eine Steuervorrichtung (39), die durch das Gehäuse getragen wird und mit der Lichtquelle, dem optischen Sensor und dem zweiten NFC-Sensor gekoppelt ist, wobei die Steuervorrichtung konfiguriert ist, zu veranlassen, dass die Lichtquelle den Plug-in-Vorrichtungsanschluss beleuchtet, basierend auf NFC-Kommunikationen zwischen den ersten und zweiten NFC-Sensoren und dem Umgebungslichtpegel.

2. Die elektronische Vorrichtung (33) gemäß Anspruch 1, wobei die Steuervorrichtung konfiguriert ist, zu veranlassen, dass die Lichtquelle (37) den Plug-in-Vorrichtungsanschluss (36) beleuchtet, basierend auf NFC-Kommunikationen zwischen den ersten und zweiten NFC-Sensoren (32, 35) und darauf, dass der Umgebungslichtpegel unter einem Schwellenlichtpegel ist.

3. Die elektronische Vorrichtung (33) gemäß Anspruch 1, wobei die Steuervorrichtung konfiguriert ist, zu veranlassen, dass die Lichtquelle (37) den Plug-in-Vorrichtungsanschluss (36) mit unterschiedlichen Helligkeiten beleuchtet, basierend auf NFC-Kommunikationen zwischen den ersten und zweiten NFC-Sensoren (32, 35) und dem Umgebungslichtpegel.

4. Die elektronische Vorrichtung (33) gemäß Anspruch 1, wobei die Steuervorrichtung (39) weiter konfiguriert ist, zu veranlassen, dass die Lichtquelle (37) eine Beleuchtung des Plug-in-Vorrichtungsanschlusses (36) ändert, basierend auf einer physikalischen Verbindung der Plug-In-Vorrichtung (31) mit dem Plug-In-Vorrichtungsanschluss.

5. Die elektronische Vorrichtung (43) gemäß Anspruch 1, die weiter eine Anzeige (43') aufweist, die durch das Gehäuse (34) getragen wird und mit der Steuervorrichtung (39) gekoppelt ist; und wobei die Steuervorrichtung konfiguriert ist, zu veranlassen, dass die Anzeige einen Positionsindikator (32) anzeigt, um eine Position des Plug-in-Vorrichtungsanschlusses (46) anzugeben.

6. Die elektronische Vorrichtung gemäß Anspruch 1, die weiter eine Anzeige (43') aufweist, die durch das Gehäuse (34) getragen wird und mit der Steuervorrichtung (39) gekoppelt ist; und wobei die Steuervorrichtung weiter konfiguriert ist, zu bestimmen, ob die Plug-in-Vorrichtung (41') und der Plug-In-Vorrichtungsanschluss (46') inkompatibel sind, und, wenn ja, zu veranlassen, dass die Anzeige einen Inkompatibilitäts-Indikator anzeigt.

7. Die elektronische Vorrichtung gemäß Anspruch 1, wobei die Plug-in-Vorrichtung (31) eine Vielzahl von verschiedenen Plug-in-Vorrichtungen aufweist; wobei der Plug-in-Vorrichtungsanschluss (36) eine Vielzahl von verschiedenen Plug-in-Vorrichtungsanschlüssen aufweist; und wobei die Steuervorrichtung konfiguriert ist, zu veranlassen, dass die Lichtquelle (37) einen gegebenen der Plug-in-Vorrichtungsanschlüsse beleuchtet, basierend auf NFC-Kommunikationen zwischen dem zweiten NFC-Sensor (35) und dem ersten NFC-Sensor (32) eines jeweiligen Plug-in-Vorrichtungstyps.

8. Ein Nahfeldkommunikations(NFC - near-field communication)(30)-System, das eine elektronische Vorrichtung (33) gemäß Anspruch 1 aufweist.

9. Ein Verfahren zur Verwendung zumindest einer Plug-in-Vorrichtung (31), die einen ersten Nahfeldkommunikations(NFC - near-field communication)-Sensor (32) aufweist, und einer mobilen drahtlosen elektronischen Kommunikationsvorrichtung, die aufweist ein Gehäuse, das einen Plug-in-Vorrichtungsanschluss (36) definiert, eine Lichtquelle, die durch das Gehäuse getragen wird, wobei die Lichtquelle (37) positioniert ist, den Plug-in-Vorrichtungsanschluss zu beleuchten, einen optischen Sensor, der durch das tragbare Gehäuse getragen wird, und einen zweiten NFC-Sensor (35), der durch das tragbare Gehäuse getragen wird, wobei das Verfahren a ufwe ist:
Herstellen von NFC-Kommunikationen zwischen den ersten und zweiten NFC-Sensoren (32, 35), wenn diese in Nähe zueinander sind;
Bestimmen eines Umgebungslichtpegels unter Verwendung des optischen Sensors (38); und
Beleuchten des Plug-in-Vorrichtungsanschlusses (36) basierend auf NFC-Kommunikationen zwischen den ersten und zweiten NFC-Sensoren und dem Umgebungslichtpegel.

10. Das Verfahren gemäß Anspruch 9, wobei das Beleuchten aufweist ein Beleuchten des Plug-in-Vorrichtungsanschlusses (36) basierend auf NFC-Kommunikationen zwischen den ersten und zweiten NFC-Sensoren (32, 35) und darauf, dass der Umgebungslichtpegel unter einem Schwellenlichtpegel ist.

11. Das Verfahren gemäß Anspruch 9, wobei das Beleuchten aufweist ein Beleuchten des Plug-in-Vorrichtungsanschlusses (36) mit unterschiedlichen Helligkeiten basierend auf NFC-Kommunikationen zwischen den ersten und zweiten NFC-Sensoren (32, 35) und dem Umgebungslichtpegel.

12. Das Verfahren gemäß Anspruch 9, das weiter aufweist ein Ändern einer Beleuchtung des Plug-in-Vorrichtungsanschlusses (36) basierend auf einer physikalischen Verbindung der Plug-In-Vorrichtung (31) mit dem Plug-In-Vorrichtungsanschluss.

## Revendications

1. Dispositif électronique (33) en mesure d'être utilisé avec un dispositif enfichable (31) comprenant un premier capteur de communication en champ proche (NFC, pour « *Near-Field Communication »)* (32), le dispositif électronique comprenant :
un boîtier (34) qui définit un port de dispositif enfichable (36) ;
une source lumineuse (37) supportée par ledit boîtier, la source lumineuse étant positionnée pour éclairer le port de dispositif enfichable ;
un capteur optique (38) supporté par ledit boîtier, le capteur optique étant configuré pour déterminer un niveau de la lumière ambiante ;
un second capteur NFC (35) supporté par ledit boîtier, le second capteur NFC étant configuré pour établir des communications NFC avec ledit premier capteur NFC lorsqu'il est à proximité de celui-ci ; et
un contrôleur (39) supporté par ledit boîtier et couplé à ladite source lumineuse, audit capteur optique et audit second capteur NFC, le contrôleur étant configuré pour commander à ladite source lumineuse d'éclairer le port de dispositif enfichable en fonction des communications NFC entre lesdits premier et second capteurs NFC et du niveau de lumière ambiante.

2. Dispositif électronique (33) selon la revendication 1, dans lequel ledit contrôleur est configuré pour commander à ladite source lumineuse (37) d'éclairer le port de dispositif enfichable (36) en fonction des communications NFC entre lesdits premier et second capteurs NFC (32, 35) et du fait que le niveau de lumière ambiante est inférieur à un seuil de niveau de lumière.

3. Dispositif électronique (33) selon la revendication 1, dans lequel ledit contrôleur est configuré pour commander à ladite source lumineuse (37) d'éclairer le port de dispositif enfichable (36) avec des luminosités différentes en fonction des communications NFC entre lesdits premier et second capteurs NFC (32, 35) et du niveau de lumière ambiante.

4. Dispositif électronique (33) selon la revendication 1, dans lequel ledit contrôleur (39) est configuré en outre pour commander à ladite source lumineuse (37) de modifier l'éclairage du port de dispositif enfichable (36) en fonction de la connexion physique du dispositif enfichable (31) dans le port de dispositif enfichable.

5. Dispositif électronique (43) selon la revendication 1, comprenant en outre un écran d'affichage (43') supporté par ledit boîtier (34) et couplé audit contrôleur (39), et dans lequel ledit contrôleur est configuré pour commander audit écran d'affichage d'afficher un indicateur de position (32) afin d'indiquer une position du port de dispositif enfichable (46).

6. Dispositif électronique selon la revendication 1, comprenant en outre un écran d'affichage (43') supporté par ledit boîtier (34) et couplé audit contrôleur (39), et dans lequel ledit contrôleur est configuré en outre pour déterminer si le dispositif enfichable (41') et le port de dispositif enfichable (46') sont incompatibles et, si tel est le cas, pour commander audit écran d'affichage d'afficher un indicateur d'incompatibilité.

7. Dispositif électronique selon la revendication 1, dans lequel le dispositif enfichable (31) comprend une pluralité de différents dispositifs enfichables ; dans lequel le port de dispositif enfichable (36) comprend une pluralité de différents ports de dispositif enfichable ; et dans lequel ledit contrôleur est configuré pour commander à ladite source lumineuse (37) d'éclairer un port donné parmi les ports de dispositif enfichable en fonction des communications NFC entre ledit second capteur NFC (35) et le premier capteur NFC (32) d'un type respectif de dispositif enfichable.

8. Système de communication en champ proche (NFC pour « *Near-Field Communication »)* (30) comprenant un dispositif électronique (33) selon la revendication 1.

9. Procédé d'utilisation d'au moins un dispositif enfichable (31) comprenant un premier capteur de communication en champ proche (NFC, pour « Near-Field *Communication* ») (32) et un dispositif de communication mobile sans fil comportant un boîtier qui définit un port de dispositif enfichable (36), une source lumineuse supportée par le boîtier, la source lumineuse (37) étant positionnée pour éclairer le port de dispositif enfichable, un capteur optique supporté par le boîtier portatif et un second capteur NFC (35) supporté par le boîtier portatif, le procédé comprenant les étapes consistant à :
établir des communications NFC entre les premier et second capteurs NFC (32, 35) lorsqu'ils sont à proximité l'un de l'autre ;
déterminer un niveau de lumière ambiante à l'aide du capteur optique (38) ; et
éclairer le port de dispositif enfichable (36) en fonction des communications NFC entre les premier et second capteurs NFC et du niveau de la lumière ambiante.

10. Procédé selon la revendication 9, dans lequel ladite étape d'éclairage comprend l'étape consistant à éclairer le port de dispositif enfichable (36) en fonction des communications NFC entre les premier et second capteurs NFC (32, 35) et du fait que le niveau de lumière ambiante est inférieur à un seuil de niveau de lumière.

11. Procédé selon la revendication 9, dans lequel ladite étape d'éclairage comprend l'étape consistant à éclairer le port de dispositif enfichable (36) avec des luminosités différentes en fonction des communications NFC entre les premier et second capteurs NFC (32, 35) et du niveau de lumière ambiante.

12. Procédé selon la revendication 9, comprenant en outre l'étape consistant à modifier l'éclairage du port de dispositif enfichable (36) en fonction de la connexion physique du dispositif enfichable (31) sur le port de dispositif enfichable.
